# EUROPEAN PATENT SPECIFICATION

(11) **EP 0 479 544 B1**
(45) Date of publication and mention of the grant of the patent: **22.05.1996**
(21) Application number: 91308966.0
(22) Date of filing: 30.09.1991
(51) Int. Cl.: F16D 7/02, G11B 15/50

(54) **Spring clutches and winders having clutches**
Federkupplungen und Spulenhülsen mit Kupplungen
Embrayages à ressort et bobinoirs avec embrayages

(30) Priority: 02.10.1990 JP 265893/90
(43) Date of publication of application: 08.04.1992
(73) Proprietor: Komatsu, Fumito, Shiojiri-shi,Nagano-ken (JP)
(72) Inventor: Komatsu, Fumito, Shiojiri-shi,Nagano-ken (JP)
(74) Representative: Gura, Henry Alan

(56) References cited:
- DE-A- 2 441 218
- GB-A- 1 112 489
- GB-A- 2 172 066
- US-A- 2 009 914

## Description

The present invention relates to fixed torque spring clutches.

The inventor has developed a fixed spring clutch (see Fig. 10), the subject of European Patent Application No. 90307029.0, filed 27 June 1990 (EP-A-463 248).

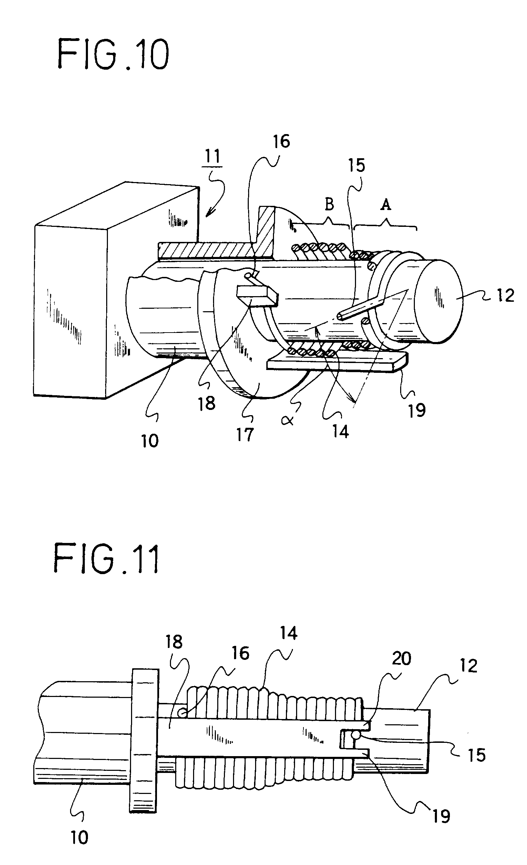

This spring clutch, shown in Fig. 10, has a coil spring 14 consisting of a first clamping portion A and a second clamping portion B. The first clamping portion A of the coil spring 14 is wound around a shaft member 12 of a second rotor 11. There is formed an engagement element 16 at the end of the second clamping portion B. The engagement element 16 contacts holding member 18 provided in a flange 17 of a first rotor 10. There is provided a release member 19 on the first rotor 10. The release member 19 is inclined away from the holding member 18 at an angle α. The release member 19 rotates in the direction of loosening the first clamping portion A so as to contact an engagement element 15, which is formed at the end of the first clamping portion A.

By rotating either the first rotor 10 or the second rotor 11 in the prescribed direction with respect to the other, the first clamping portion A of the coil spring 14 winds around the shaft member 12. The end of the second clamping portion B is caught by the holding member 18, so that the torque of the second clamping portion B rises in accordance with the spring characteristics. When the release member 19 contacts the first clamping portion A the grip of that portion on the shaft member 12 is loosened. In spite of loosening the clamping portion A, the torque of the second clamping portion B continues to rise while the clamping force of the first clamping portion A remains greater than the torque of the clamping portion B. When the clamping force of the first clamping portion A and the torque of the second clamping portion B are balanced, the first clamping portion A then slips on the shaft member 12, so that the torque is stabilized.

The total torque is primarily affected by the torque of the second clamping portion B; the torque of the first clamping portion A is relatively small. Variations in torque in this kind of clutch are minimized, therefore, in spite of any differences in diameter of the first clamping portions.

Note that if the second clamping portion B of the coil spring 14, which is previously wound to have a torsion slightly less than the prescribed operating torque, is attached between the holding member 18 and a stop 20 (see Fig. 11), the torque quickly reaches the prescribed value upon rotation of first rotor 10.

In the fixed torque spring clutch shown in Figs. 10 and 11, the torque can be freely defined by selecting the spring characteristics of the second clamping portion B.

However, the fixed torque spring clutch has following disadvantages:
(1) The friction caused by slippage between the shaft member 12 in the first clamping portion A creates heat and the frictional coefficient µ consequently changes, so that the torque gradually rises during operation.
(2) The clamping force of the first clamping portion A is lost with use due to abrasion caused by said slippage.

It is an object of the present invention to at least mitigate one or more of these disadvantages.

The invention provides a fixed torque spring clutch comprising:
a first rotor;
a second rotor being coaxial to said first rotor; and
a coil spring for coupling together said first and second rotors,
a shaft member being provided on one of said rotors; and
a plurality of catch portions being provided on the other rotor,
said coil spring extending around said shaft member, both ends of said coil spring being engageable by said catch portions in a clamping state thereof, said coil spring having a first clamping portion for clamping said shaft member with a prescribed clamping force by frictional engagement therewith, and a second clamping portion which is radially spaced from said shaft portion.

In such a clutch, the coil spring may be arranged around the external circumference of the shaft member.

In an alternative arrangement, the clutch may comprise a hollow cylindrical shaft portion within which said coil spring extends, the both ends of said coil spring being caught by said catch portions in a diameter enlarging state thereof, said coil spring having a first clamping portion for elastically contacting the inner face of said shaft member and a second clamping portion whose outer diameter is smaller than the inner diameter of the corresponding part of said shaft member.

The wire forming the coil spring preferably has, in section, a flat operative face for contacting either the outer circumferential or inner face of the shaft member respectively in these alternative arrangements.

A spring clutch according to the present invention can be applied to a power transmission mechanism of a winder for winding a tape, a string, a wire or other flexible elongate element around a reel, for example.

The present invention will be described in more detail with reference to the accompanying drawings wherein preferred embodiments are shown. In the drawings:
Fig. 1 is a perspective view, with portions broken away for clarity, of a first embodiment of the present invention;
Fig. 2 is an explanatory view of a coil spring prior to attachment to a shaft member;
Fig. 3 shows a graph of torque characteristics of both conventional spring clutches and an embodiment of the present invention;
Fig. 4 shows a graph of the relationship between rate of torque change and number of revolutions;
Fig. 5 is a sectional view of another embodiment in which a shaft section has a hollow cylindrical shape and a coil spring is provided therein;
Fig. 6 is a partially sectioned front view of another embodiment having a means for adjusting torque;
Fig. 7 is a left side view of the embodiment shown in Fig. 6;
Fig. 8 is a sectional view of a reel having a fixed torque spring clutch of the present invention;
Fig. 9 is an exploded perspective view of the main part of the reel shown in Fig. 8;
Fig. 10 is a perspective view, with portions broken away for clarity, of a known fixed torque spring clutch; and
Fig. 11 is an explanatory view of another known fixed torque spring clutch.

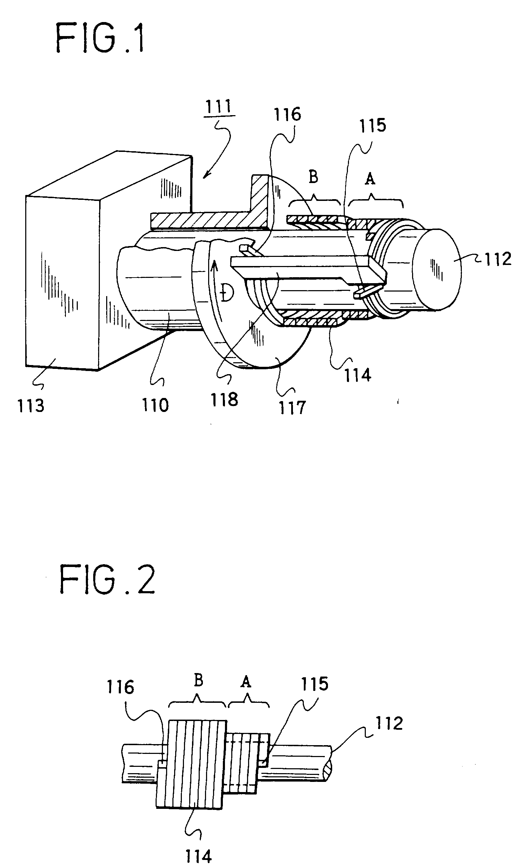

In Fig. 1, part 110 is a first rotor and part 111 is a second rotor. The rotor 111 has a shaft member 112. To simplify the explanation, the shaft member 112 is fixed to part 113 which represents a driven member (not depicted).

A coil spring 114 is wound around the outer circumferential face of the shaft member 112. The coil spring 114 has a first clamping portion A, which clamps the outer circumferential face of the shaft section 112, and a second clamping portion B, which is adjacent to the first clamping section A. There is a clearance between the outer circumferential face of the shaft member 112 and the inner face of the second clamping portion B. The both ends of the coil spring 114 are bent outward as engagement elements 115 and 116. The wire forming the coil spring 114 has, in section, a flat face which faces the outer circumferential face of the shaft member 112. By forming the flat face, the inner face of the coil spring 114 is capable of having a maximized contact area with the outer circumferential face of the shaft member 112, so that the clamping pressure of the coil spring 114 can be reduced and abrasion between the coil spring and the shaft member 112 can be minimized. The sectional shape of the coil spring 114 need not be rectangular; any other cross-sectional shape having a flat face which faces the outer circumferential face of the shaft member 112 can be employed similarly. Furthermore, the whole coil spring 114 need not have the flat face in section; the flat face may be formed in at least the part corresponding to the first clamping portion A, which always clamps the shaft member 112. In cases where the effects of abrasion can be ignored, the sectional shape of the coil spring 114 can, of course, be rounded, eg. circular.

The first rotor 110 has a cylindrical shape and rotatably overlies the shaft member 112. The first rotor 110 has a flange 117. The first rotor 110 is rotated by a driving means such as a motor (not shown).

An engagement member 118 is provided on the end face of the flange 117. The engagement elements 115 and 116 elastically contact respectively opposite sides of the engagement member 118. The coil spring 114 is previously wound to have a prescribed clamping force and is positioned about the shaft member 112.

In this embodiment, the inner diameter of the first clamping portion A is larger than the diameter of the shaft member 112 in the non-clamping state (see Fig. 2). Upon assembly the coil spring 114 is wound to have a prescribed torsion and the engagement elements 115 and 116 elastically contact the engagement member 118, resulting in contact between the clamping portion A and the shaft member 112. In summary, the first clamping portion A is initially set on the shaft member 112 with the prescribed clamping force.

In the following, the action of the spring clutch will be explained.

Rotating the first rotor 110 in the direction D, the engagement member 118 presses against the engagement element 116 to wind the coil spring 114 tighter. A torque T1 transmitted from the engagement member 118 to the engagement element 116 is much greater than the force of friction between the first clamping portion A and the shaft member 112, so that the coil spring 114 rotates together with the first rotor 110 by virtue of the elastic contact between the engagement element 115 with the engagement member 118. Namely, the first clamping portion A slips on the shaft member 112, and a predetermined torque is generated between the first rotor 110 and the second rotor 111. A force T2, which elastically presses the engagement element 115 against the engagement member 118, acts to reduce the torque from the first rotor 110 to the second rotor 111, ie. it acts in the opposite direction to the element 114. Thus, the torque T from the first rotor 110 to the second rotor 111 will be defined as T=T1-T2 on the condition that the number of spring windings of the first clamping member A is 3 to 5, so that the torque T is independent of the frictional coefficient µ. Friction is naturally generated between the first clamping portion A and the shaft member 112, and the frictional coefficient µ increases. However, the torque T is defined by T1 and T2 (T1-T2) or the initial clamping force of the coil spring 112, so that the prescribed level of torque can be maintained without regard to changes of the frictional coefficient µ.

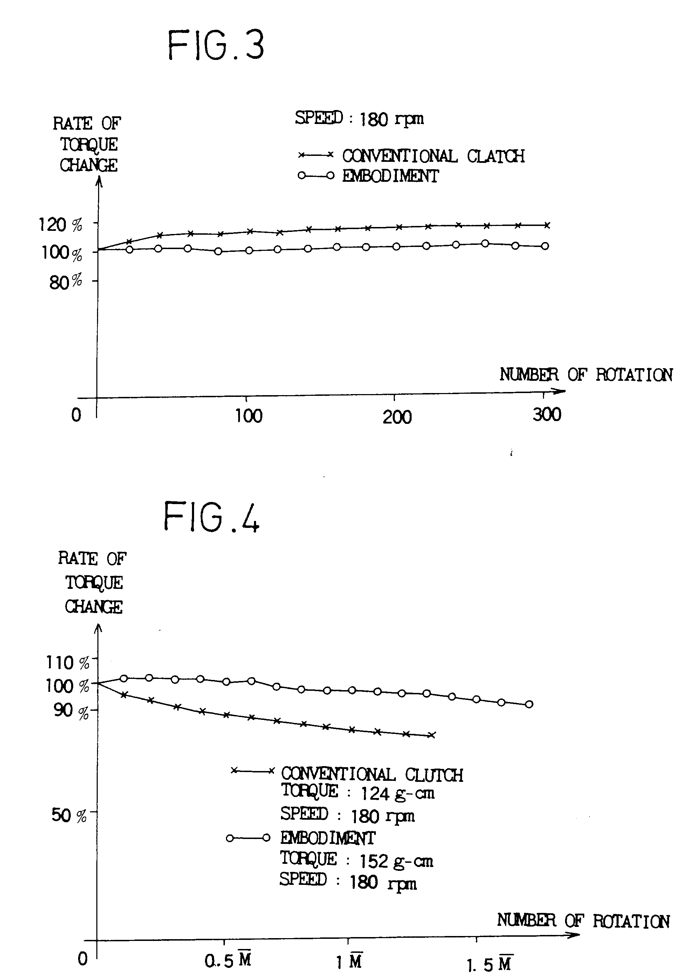

In the fixed torque spring clutch shown in Fig. 10, the friction caused by the rotational slippage creates heat and the frictional coefficient µ changes, so that the torque generated by release member 19, which works to loosen the first clamping portion A, gradually rises. The characteristics of the spring clutch of this embodiment and the conventional or earlier spring clutch of Fig. 10 are shown in Fig. 3.

In Fig. 3, the torque scarcely changes in the spring clutch of this embodiment; the torque rises 15% within 300 turns (rotational speed: 180rpm) in the earlier spring clutch. In the earlier spring clutch, the release member 19 relaxes the clamping force in the opposite direction to the windings of the first clamping portion A, so that slippage is apt to occur and the slippage causes minute torque changes. On the other hand, in the present embodiment, the elements 115 and 116 elastically contact the engagement member 118 during rotation, so that the slippage and minute torque changes do not occur at all, and the rotation is transmitted smoothly.

Next, Fig. 4 shows a graph of a relationship between characteristics of torque change and number of revolutions. As clearly shown in Fig. 4, the torque of this embodiment scarcely changes in spite of its greater torque and higher speed in comparison to the earlier spring clutch. The spring clutch of this embodiment also offers the possibility of a longer service life.

The relationship between the life span of spring clutches and the torque change relates to loss of clamping force in the first clamping portion, which is caused by abrasion between the first clamping portion and the shaft member. In the case of the earlier spring clutch, running torque T is almost entirely defined as T=T1+T2 (T1: designed torque of the second clamping portion B, T2: clamping torque at the end of the first clamping portion A), so that T1 and T2 fall in proportion to the torque reduction of the first clamping portion A caused by abrasion. Applying this theory, the running torque T falls quickly. Meanwhile, in the present embodiment, the running torque T is defined as T=T1-T2; if both T1 and T2 fall, the difference (T1-T2) is quite minimal, so that the rate of the torque change remains low.

Furthermore, in the earlier spring clutch, considering the distribution of the clamping force of the first clamping portion A with respect to the shaft member 12, the clamping force at the distal end of the second clamping portion B is greater because of its inherent clamping force; the clamping force at the distal end of first clamping portion A is almost zero because of the function of the release member 19. Thus, the abrasion between the coil spring 14 and the shaft member 12 is concentrated on the side of the first clamping portion A nearer the second clamping portion B. On the other hand, in this embodiment of the present invention, the whole of the first clamping portion A has a calculated uniform clamping force, so that the clamping force is not concentrated and the abrasion is both reduced and evenly distributed. For this reason, the spring clutch of this embodiment can be expected to have a longer life.

Note that, the shaft member 112 may be rotatably driven and transmit its torque to the first rotor 110.

The inner diameter of the second clamping portion B of the coil spring 114 is shown larger than the inner diameter first clamping portion A. The first and the second clamping portions A and B, though, may have the same inner diameter, in which case the part of the shaft member 112 which lies under the second clamping portion B has a correspondingly smaller diameter so as to form a clearance between the outer circumferential face of the shaft member 112 and the inner face of the second clamping portion B. In another modification the coil spring 114 may have the first clamping portion A in the centre and second clamping portion B divided between both ends.

In the non-clamping state, the first clamping portion is not always required to rotate the shaft member 112; the first clamping portion A is capable of rotating together with the second clamping portion B. In this case, when engagement member 118 imparts torque to the second clamping portion B, the first clamping portion A instantaneously rotates the shaft member 112.

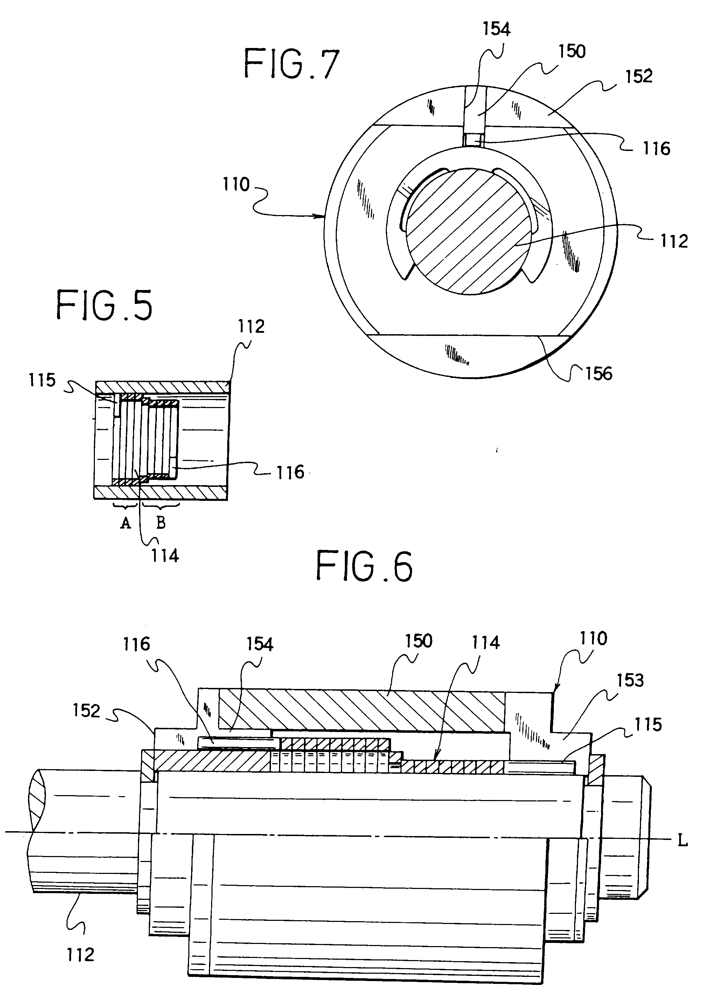

Furthermore, as shown in Fig. 5, a shaft member 112 may be formed as a hollow cylinder and a coil spring 114 with a first clamping portion A of larger diameter and a second clamping portion B of smaller diameter is fitted within the hollow shaft member 112. In this embodiment, before a coil spring 114 is fitted into the shaft member 112, the outer diameter of the first clamping portion A is smaller than the inner diameter of the shaft member 112. When the coil spring 114 is fitted into the shaft member 112, the diameter of the coil spring 114 is enlarged to have the first clamping portion A elastically contact the inner face of the shaft member 112, and engagement elements 115 and 116 elastically contact an engagement member (not shown). This embodiment functions in the same way as the first embodiment. It is similarly possible to have stepped inner diameters within the shaft member rather than stepped diameter spring portions.

Next, another embodiment having means for adjusting the torque will be explained with reference to Fig. 6 (a partially cutaway front view) and Fig. 7 (a left side view).

A first rotor 110 has a hollow tubular shape and is rotatably mounted on a shaft member 112. The rotor 110 has a cylindrical portion 150 and a portion 152, which is fitted into the open end of the portion 150. A slot 154 in the fitted portion 152 extends in the direction of the central axis L. An engagement element 116 of a coil spring 114 is inserted into and is caught in the slot 154. Another engagement element 115 of the coil spring 114 is inserted into and caught in a slot which is formed in a ring 153 fixed to the opposite end of the cylindrical portion 150 and which also extends in the direction of the axis L.

To adjust the torque characteristics, the rotational position of the fitted portion 152 with respect to the cylindrical portion 150 or the rotational position of the fitted portion 152 with respect of the axis L can be adjusted. With this adjustment, the clamping force of the coil spring 114, especially the clamping force of the first clamping portion A with respect to the shaft member 112, can be varied so that the torque characteristics of the spring clutch can be adjusted. In this embodiment, the cylindrical portion 150 and the fitted portion 152 are made of plastics, eg. ABS resin. The fitted section 152 is press-fitted into the cylindrical section 150, and the engagement element 116 of the coil spring 114 is inserted into the slot 154 of the fitted portion 152. The rotational angle of the fitted portion 152 with respect to the cylindrical portion 150 is adjusted until the prescribed torque characteristics are attained. Then, a solvent, eg. methyl ethyl ketone, is applied to the portions 150 and 152 so as to bond them together. Note that there is an oval projection 156 on the left end face of the fitted portion 152 for applying a turning tool.

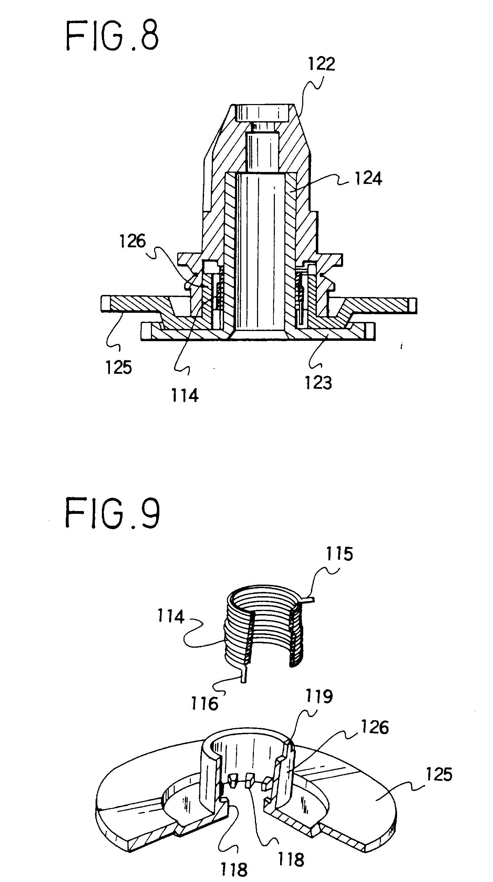

A reel for a cassette tape recorder, which has a fixed torque spring clutch according to the present invention, will be explained with reference to Figs. 8 and 9.

A rotary cylinder 124, which extends upwards from an upper face of a fast forward gear 123, is press-fitted into a cap-reel 122. The cap-reel 122 is the second rotor, and a fixed axle (not shown) fits into the rotary cylinder 124.

Driving force from a motor (not shown), which is mounted within the tape recorder proper, is transmitted to a gear 125. A cylindrical portion 126 extending upwards from the centre of the gear 125 is free to rotate in a space between the outer circumferential face of the rotary cylinder 124 and the lower inner face of the cap-reel 122. With this arrangement, the cylindrical portion 126 can be rotated on the rotary cylinder 124.

A coil spring 114 is positioned coaxially around the rotary cylinder 124. A first clamping portion A constantly clamps the rotary cylinder 124. An engagement element 115 of the first clamping portion A can elastically contact an engagement member 119 integral with the cylindrical portion 126. An engagement element 116 of a second clamping portion B can elastically contact any of a plurality of engagement members 118, which are formed on the inner face of the cylindrical portion 126 (see Fig. 9). Therefore, when the gear 125 is rotated by the motor in the recorder, a driving force is transmitted to the cap-reel 122 by the engagement elements 118 and 119 and the coil spring 114 to rotate the cap-reel 122, so that a reel (not shown) in a cassette is rotated to wind a tape (not shown) around the reel. During the rotation of the cap-reel 122, it is, as described above, rotated with fixed torque so that the tape is wound around the reel in the cassette with fixed tension.

The torque of the second clamping portion B can be easily adjusted by selecting an alternative engagement member 118, for holding the engagement element 116. In this case, it is preferable to bore through-holes (not shown) in the gear 123 which correspond to the engagement members 118. With these through-holes, changing the selected engagement member 118 can be easily effected even if the reel has been assembled on the recorder proper.

The example of the reel in the cassette tape recorder has been explained above but the fixed torque spring clutch can be applied to power transmission mechanisms of many kinds of winders, which wind tapes, strings, wires, etc. around reels.

Preferred embodiments of the present invention have been described in detail which are inexpensive to produce, which are capable of transmitting a very stable torque and which can be given a long service life.

## Claims

1. A fixed torque spring clutch comprising:
a first rotor (110;125);
a second rotor (111;122) coaxial to said first rotor (110),
a coil spring (114) for a driving connection between said first and second rotors,
one of said rotors (110,111) having a shaft member (112;126) circumferentially engageable by a first clamping portion (A) of the spring, and
a second clamping portion (B) of the spring being held out of torque-transmitting engagement with said shaft member,
characterised in that
the other of said rotors (110,111;125,122) has means (118;118,119) for engagement with both ends of the coil spring (114) in a clamping state of the spring.

2. A fixed torque spring clutch according to claim 1 wherein said first clamping portion of the spring is engageable with an external face of the shaft member (112).

3. The fixed torque spring clutch according to claim 2, wherein the inner diameter of said coil spring (114) is larger than the diameter of said shaft member (112;124) before said coil spring (114) is provided over said shaft member.

4. A fixed torque spring clutch according to claim 1 wherein said first clamping portion of the spring is engageable with an internal face of a hollow portion of the shaft member (124).

5. The fixed torque spring clutch according to claim 3, wherein the outer diameter of said coil spring (114) is smaller than the inner diameter of said shaft member (112) before said coil spring (114) is provided in said shaft member (112).

6. The fixed torque spring clutch according to any one of the preceding claims wherein the coil spring (114) has a section with a flat face which is directed towards an engaging face of said shaft member (112;124).

7. The fixed torque spring clutch according to any one of the preceding claims wherein the engagement means comprise a plurality of alternative rotationally spaced engagement elements (118) for at least one end of the spring (114) for adjustment of the clutch torque value.

8. The fixed torque clutch according to any one of claims 1 to 6 wherein the engagement means (152) are adjustably securable for adjustment of the clutch torque value.

9. A winder comprising a reel for winding a flexible elongate element and a power transmission mechanism for driving the reel, said power transmission mechanism comprising a spring clutch according to any one of the preceding claims.

## Patentansprüche

1. Federkupplung mit festem Drehmoment mit:
einem ersten Rotor (110; 125);
einem zweiten Rotor ((111; 122) koaxial zu dem ersten Rotor (110);
einer Schraubenfeder (114) für eine antreibende Verbindung zwischen dem ersten und dem zweiten Rotor,
wobei einer der Rotoren (110, 111) ein Wellenteil (112; 126) aufweist, das umfangsmäßig von einem ersten Klemmabschnitt (A) der Feder angegriffen werden kann, und
ein zweiter Klemmabschnitt (B) der Feder außer einem Drehmoment übertragenden Eingriff mit dem Wellenteil gehalten wird;
dadurch gekennzeichnet,
daß der andere der Rotoren (110, 111; 125, 122) ein Mittel (118; 118, 119) zum Angreifen mit beiden Enden der Schraubenfeder (114) in einem klemmenden Zustand der Feder aufweist.

2. Federkupplung mit festem Drehmoment nach Anspruch 1, bei der der erste Klemmabschnitt der Feder an eine externe Fläche des Wellenteiles (122) angreifen kann.

3. Federkupplung mit festem Drehmoment nach Anspruch 2, bei der der innere Durchmesser der Schraubenfeder (114) größer als der Durchmesser des Wellenteiles (112; 124), bevor die Schraubenfeder (114) über dem Wellenteil vorgesehen ist, ist.

4. Federkupplung mit festem Drehmoment nach Anspruch 1, bei der der erste Klemmabschnitt der Feder an eine innere Fläche eines hohlen Abschnittes des Wellenteiles (124) angreifen kann.

5. Federkupplung mit festem Drehmoment nach Anspruch 3, bei der der äußere Durchmesser der Schraubenfeder (114) kleiner als der innere Durchmesser des Wellenteiles (112), bevor die Schraubenfeder (114) in dem Wellenteil (112) vorgesehen ist, ist.

6. Federkupplung mit festem Drehmoment nach einem der vorhergehenden Ansprüche, bei der die Schraubenfeder (114) einen Schnitt mit einer flachen Fläche aufweist, die zu einer Eingriffsfläche des Wellenteiles (112; 124) gerichtet ist.

7. Federkupplung mit festem Drehmoment nach einem der vorhergehenden Ansprüche, bei der das Eingriffsmittel eine Mehrzahl von abwechselnden rotationsmäßig in einem Abstand voneinander angeordnete Eingriffselemente (118) für mindestens 1 Ende der Feder (114) zum Einstellen des Kupplungsdrehmomentwertes aufweist.

8. Federkupplung mit festem Drehmoment nach einem der Ansprüche 1 bis 6, bei der das Eingriffsmittel (152) einstellbar zur Einstellung des Kupplungsdrehmomentwertes befestigbar ist.

9. Wickler mit einer Spule zum Aufwickeln eines flexiblen länglichen Elementes und einem Kraftübertragungsmechanismus zum Antreiben der Spule, wobei der Kraftübertragungsmechanismus eine Federkupplung gemäß einem der vorhergehenden Ansprüche aufweist.

## Revendications

1. Embrayage à ressort à couple fixe, comprenant:
un premier rotor (110;125),
un second rotor (111;122) coaxial audit premier rotor (110),
un ressort hélicoïdal (114) pour une liaison d'entraînement entre lesdits premier et second rotors,
un premier desdits rotors (110,111) ayant un élément formant arbre (112;126) sur le pourtour duquel peut venir se placer une première partie de serrage (A) du ressort, et
une seconde partie de serrage (B) du ressort ne coopérant pas avec ledit arbre pour transmettre un couple, caractérisé en ce que
l'autre desdits rotors (110,111;125,122) comporte des moyens (118;118,119) pour coopérer avec les deux extrémités du ressort hélicoïdal (114) lorsque le ressort est serré.

2. Embrayage à ressort à couple fixe selon la revendication 1, dans lequel ladite première partie de serrage du ressort peut venir se placer sur une face extérieure de l'élément formant arbre (112).

3. Embrayage à ressort à couple fixe selon la revendication 2, dans lequel le diamètre intérieur dudit ressort hélicoïdal (114) est plus grand que le diamètre dudit élément formant arbre (112;124) avant que ledit ressort hélicoïdal (114) ne se soit placé sur ledit élément formant arbre.

4. Embrayage à ressort à couple fixe selon la revendication 1, dans lequel ladite première partie de serrage du ressort peut venir se placer sur une face interne d'une partie creuse dudit élément formant arbre (124).

5. Embrayage à ressort à couple fixe selon la revendication 3, dans lequel le diamètre extérieur dudit ressort hélicoïdal (114) est plus petit que le diamètre intérieur dudit élément formant arbre (112) avant que ledit ressort hélicoïdal (114) ne se soit placé dans ledit élément formant arbre (112).

6. Embrayage à ressort à couple fixe selon l'une quelconque des revendications précédentes, dans lequel le ressort hélicoïdal (114) comporte une partie à face plane orientée vers une face de coopération dudit élément formant arbre (112;124).

7. Embrayage à ressort à couple fixe selon l'une quelconque des revendications précédentes, dans lequel les moyens de coopération comportent plusieurs autres éléments de coopération (118) espacés en rotation pour au moins une extrémité du ressort (114) pour le réglage de la valeur du couple de l'embrayage.

8. Embrayage à couple fixe selon l'une quelconque des revendications 1 à 6, dans lequel les moyens de coopération (152) peuvent être fixés de manière réglable pour le réglage de la valeur du couple de l'embrayage.

9. Bobinoir comportant une bobine pour enrouler un élément allongé souple et un mécanisme de transmission d'énergie pour entraîner la bobine, ledit mécanisme de transmission d'énergie comportant un embrayage à ressort selon l'une quelconque des revendications précédentes.
